# EUROPEAN PATENT APPLICATION

(11) **EP 4 492 487 A1**
(43) Date of publication of application: **15.01.2025**
(21) Application number: 24178911.4
(22) Date of filing: 29.05.2024
(51) Int. Cl.: H01M 4/131, H01M 4/133, H01M 4/134, H01M 4/36, H01M 4/38, H01M 4/485, H01M 4/62, H01M 10/052

(54) **NEGATIVE ELECTRODE FOR RECHARGEABLE LITHIUM BATTERY AND RECHARGEABLE LITHIUM BATTERY**

(30) Priority: 14.07.2023 KR 20230091937
(71) Applicant: Samsung SDI Co., Ltd., Yongin-si, Gyeonggi-do 17084 (KR)
(72) Inventor: HAN, Seung-Hun, 17084 Yongin-si (KR); LEE, Kyuseo, 17084 Yongin-si (KR); JUNG, Hyeseung, 17084 Yongin-si (KR); AN, Hoyong, 17084 Yongn-si (KR); CHO, Chaewoong, 17084 Yongin-si (KR); KIM, Soochan, 17084 Yongin-si (KR)
(74) Representative: Marks & Clerk LLP

(57) **Abstract**

A negative electrode for a rechargeable lithium battery and a rechargeable lithium battery including the same are provided, and the negative electrode includes a current collector; a first layer including crystalline carbon; and a second layer including lithium titanium oxide having an aspect ratio of about 10:1 to about 2:1, a Si-based active material, and carbon nanotube, wherein the first layer is positioned between the current collector and the second layer and the second layer is thinner than the first layer.

## Description

### BACKGROUND

### 1. Field

One or more aspects of embodiments of the present disclosure relates to a negative electrode for a rechargeable lithium battery and a rechargeable lithium battery including the same.

### 2. Description of the Related Art

The recently increased use and production of electronic devices such as mobile phones, laptop computers, and/or electric vehicles utilizing batteries has increased the demand or desire for rechargeable batteries with relatively high capacity and lighter weight. For example, a rechargeable lithium battery has recently drawn attention as a driving power source for portable devices, as it has lighter weight than some of the comparable batteries and a relatively high energy density. Accordingly, research and development for improving performance of rechargeable lithium batteries are being actively undertaken or pursued.

A rechargeable lithium battery includes, for example, a positive electrode and a negative electrode, each of which include active material capable of intercalating and deintercalating lithium ions, and an electrolyte, and the battery may generate electrical energy due to the oxidation and reduction reaction if lithium ions are intercalated and deintercalated into the positive electrode and the negative electrode.

As a positive active material for a rechargeable lithium battery, transition metal compounds such as lithium cobalt oxide, lithium nickel oxide, lithium manganese oxide, and/or the like are being utilized.

As a negative active material for a rechargeable lithium battery, carbonaceous materials such as crystalline carbon and/or amorphous carbon, or silicon-based material have been mainly utilized.

The negative active material used to mainly include crystalline carbon such as graphite, but recent demands for high energy density and high capacity batteries have led to a rise in use of a negative active material in which crystalline carbon and the silicon-based active material are mixed. As amounts of silicon increase in the negative electrode, a conducting network may be broken due to contraction and expansion of silicon during charging and discharging, thus resulting in an increase in undesirable side reactions.

Due to the contraction and expansion of silicon, cracks may occur in silicon thereby creating a trap of (or for) lithium ions, and in addition, the volume expansion may decrease contact with lithium ions, thereby increasing charge transfer resistance (Rct).

### SUMMARY

One or more aspects of embodiments of the present disclosure are directed toward a negative electrode for a rechargeable lithium battery exhibiting excellent or suitable ionic conductivity and electrical conductivity, and excellent or suitable high-rate characteristics and the cycle-life characteristics.

One or more aspects of embodiments of the present disclosure provides a rechargeable lithium battery including the negative electrode.

One or more embodiments provide a negative electrode for a rechargeable lithium battery including a current collector; a first layer including crystalline carbon; and a second layer including lithium titanium oxide having an aspect ratio of about 10:1 to about 2:1, a Si-based active material, and carbon nanotube, wherein the first layer is positioned between the current collector and the second layer, and the second layer is thinner than the first layer (e.g., the second layer is smaller in thickness than that of the first layer).

One or more embodiments provides a rechargeable lithium battery including the negative electrode; a positive electrode; and a non-aqueous electrolyte.

At least some of the above and other features of the invention are set out in the claims.

A negative electrode for a rechargeable lithium battery according to one or more embodiments may exhibit excellent or suitable ionic conductivity and electrical conductivity, and excellent or suitable high-rate charge and discharge characteristics.

### BRIEF DESCRIPTION OF THE DRAWINGS

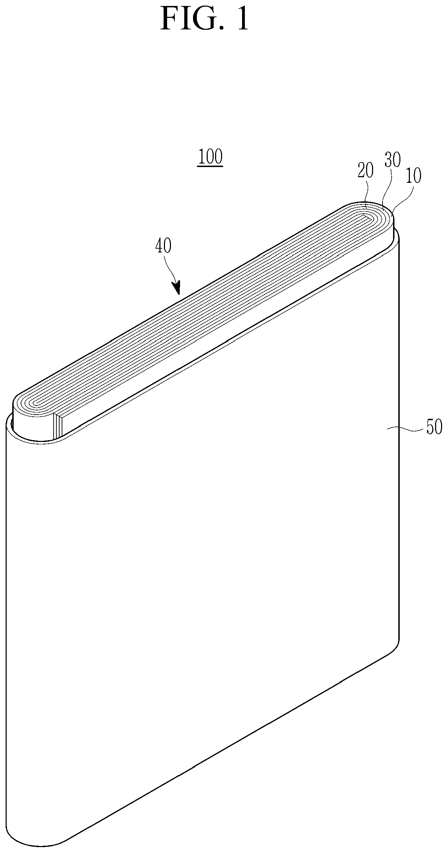

The drawing (FIG. 1) is a schematic diagram showing a rechargeable lithium battery according to some embodiments.

### DETAILED DESCRIPTION

Hereinafter, embodiments of the present disclosure are described in more detail. However, these embodiments are merely examples, the present disclosure is not limited thereto, and the present disclosure is defined by the scope of claims and their equivalents.

Terms utilized in the specification are utilized to explain embodiments, but are not intended to limit the present disclosure. Expressions in the singular include expressions in plural unless the context clearly dictates otherwise.

The term "combination thereof' may include a mixture, a laminate, a complex, a copolymer, an alloy, a blend, and/or a reactant of constituents.

The terms "comprise", "include" and "have" are intended to designate that the performed characteristics, numbers, steps, constituted elements, or a combination thereof is present, but it should not preclude the possibility of presence or addition of one or more other characteristics, numbers, steps, constituted elements, or a combination thereof.

In the drawing, elements, layers and/or regions may be exaggerated for clarity, and the same reference numerals are given to similar parts throughout the specification. When an element, such as a layer, a film, a region, a plate, and/or the like is referred to as being "on" or "over" another part, it may include cases where it is "directly on" another element (e.g., without any intervening elements therebetween), and also cases where there is another element in between. In contrast, when an element is referred to as being "directly on" another element, there are no intervening elements present.

In some embodiments, herein, "layer" refers to a shape totally formed on the entire surface or a shape formed on a partial surface, when viewed in a plan view.

Herein, "or" is not to be construed as an exclusive meaning, for example, "A or B" is construed to include just A, just B, both A and B, and/or the like.

The "thickness" of a layer, for example, may be measured through an image taken with an optical microscope such as a scanning electron microscope, for example. The thickness indicates a thickness of a single layer. This may be a thickness of the negative active material formed on one surface of the current collector, although the negative active material layers may be formed both (e.g., opposite) surfaces of the current collector. For example, if the thickness of the negative active material layer is about 100 µm, this refers to the thickness of the negative active material layer prepared on one side of the current collector, and if the negative active material is prepared on both (e.g., opposite) sides of the current collector, the total thickness of the negative active material layer included in the negative electrode may be 200 µm.

In the present disclosure, when a definition is not otherwise provided, a particle diameter indicates an average particle diameter. The particle diameter indicates an average particle diameter (D50) where a cumulative volume is about 50 volume% in a particle size distribution. The average particle size (D50) may be measured by a suitable method in the art, for example, by a particle size analyzer, by a transmission electron microscopic image, and/or by a scanning electron microscopic image. In some embodiments, a dynamic light-scattering measurement device is utilized to perform a data analysis, and the number of particles is counted for each particle size range, and from this, the average particle diameter (D50) value may be obtained through a calculation. In the present specification, when particles are spherical, "diameter" indicates a particle diameter, and when the particles are non-spherical, the "diameter" indicates a major axis length.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A negative electrode for a rechargeable lithium battery according to one or more embodiments includes a current collector, a first layer, and a second layer.

The second layer includes a lithium titanium oxide having an aspect ratio of about 10:1 to about 2:1, a Si-based active material, and carbon nanotube, and the first layer includes crystalline carbon. The second layer is thinner (e.g., smaller in thickness) than the first layer. The first layer is positioned between the current collector and the second layer. The aspect ratio may refer to the average aspect ratio and may be determined from SEM images. Lithium titanium oxides having aspect ratios within the above range may be obtained by methods well known to those skilled in the art. For example, the aspect ratio may be adjusted by controlling the temperature during the preparation of lithium titanium oxide.

In one or more embodiments, the second layer is thinner than the first layer. According to one or more embodiments, a ratio of the thickness of the first layer and the thickness of the second layer may be about 6.9:1 to about 4.1:1, or about 6.5:1 to about 4.15:1. If the ratio of the thickness of the first layer and the thickness of the second layer is within the range, the speed for transferring lithium ions is further fastened (or increased), thereby further improving the cycle-life characteristics and exhibiting superior efficiency.

If the ratio of the thickness of the first layer and the thickness of the second layer is out of the range, for example, if thickness of the first layer/thickness of the second layer is larger than 6.9/1, the capacity of the negative electrode may be reduced which may in turn require an increase in electrode density for increasing capacity, and thus, lithium transfer speed may be deteriorated. If the ratio is smaller than 4.1/1, the efficiency and the cycle-life may be reduced.

If the ratio of the thickness of the first layer and the thickness of the second layer satisfies the above range and the thickness of the first layer and the second layer are each within the range, the capacity of the battery may be sufficiently or suitably secured and the density of the electrode may be further reduced, resulting in improved battery performances.

The negative electrode according to one or more embodiments includes the Si-based active material as a separate layer from crystalline carbon, so that the volume expansion of the Si-based active material does not affect (or does not substantially affect) crystalline carbon, and the relatively high or suitable capacity due to inclusion of the Si-based active material may be achieved.

The Si-based active material is included in the second layer, together with lithium titanium oxide having an excellent or suitable conductivity, so that shortcomings related to the relatively slight reduction of lithium ion transfer speed due to low ionic conductivity of the Si-based active material may be resolved and rapid charge performance may be improved. In the case of utilizing lithium titanium oxide in the first layer, together with crystalline carbon, because crystalline carbon has a relatively high conductivity, the effects of utilizing lithium titanium oxide may be insignificant (e.g., relatively minor).

For example, the effect of improving lithium ion transfer speed due to the utilization of lithium titanium oxide may be more effective (e.g., may be further increased) if lithium titanium oxide having a long rod shape and not a spherical shape, for example, having an aspect ratio of about 10:1 to about 2:1 is utilized. Lithium titanium oxide with the aspect ratio above has a longer length than the spherical shape (e.g., has an elongated shape rather than a spherical shape), thus allowing lithium ions to transfer along this lithium titanium oxide for a longer distance, which may improve the overall lithium ion transfer speed in the first layer.

As utilized herein, an aspect ratio may be a ratio between a length of a longer axis and a width (length) of a shorter axis of lithium titanium oxide, for example, length of the longer axis : width (length) of the shorter axis. The length of the longer axis refers to a length of the axis being longer than the other axis among the two axes (x-axis and y-axis) that make up one side. The aspect ratio within the range provided herein indicates lithium titanium oxide particles having a relatively long (e.g., elongated) shape of which length is long, such as a rod shape and/or a fiber shape.

The lithium titanium oxide has an aspect ratio of about 10:1 to about 2:1, for example, about 8:1 to about 2:1, or about 6:1 to about 2:1.

If the aspect ratio of lithium titanium oxide is satisfied within the range, a conductive network may be well or suitably formed in the negative active material layer, thereby reducing charge transfer resistance, Rct. This may enable the negative active material layer to provide a sufficient or suitable conductivity even though lithium titanium oxide is utilized in a relatively small amount, and thus, the silicon-based active material included in the first layer may be utilized in a relatively large amount, allowing the battery capacity to be further increased.

If the aspect ratio of lithium titanium oxide is out of the range, for example, the longer axis is too long so that a ratio of length of longer axis : width (length) of short axis is more than 10:1, lithium titanium oxide may not be suitably distributed in the first layer throughout.

If length of the longer axis is too short, for example, a ratio of length of longer axis : width (length) of short axis is less than 2:1, the length of longer axis may be too short compared to a particle size, thus making it difficult to form the conductive network between the Si-based active materials.

In the embodiments in which lithium titanium oxide is utilized, if lithium titanium oxide without a long axis and a short axis is utilized, for example, if lithium titanium oxide has the two axes on one side being virtually identical, e.g., having an aspect ratio of 1, such as a particle shape, the conductive network effects may not be suitably realized.

Lithium titanium oxide may be a compound represented by Chemical Formula 1.

Chemical Formula 1 Li₄₊ₓTi_{y}M_{z}Oₜ,

wherein in Chemical Formula 1, 0≤x≤3, 1≤y≤5, 0≤z≤3, 3≤t≤12, M is selected from Mg, La, Tb, Gd, Ce, Pr, Nd, Sm, Ba, Sr, Ca, or a combination thereof.

The second layer includes carbon nanotube, and the carbon nanotube may be a single-walled carbon nanotube (SWCNT), a multi-walled carbon nanotube (MWCNT), or a combination thereof.

In one or more embodiments, the deterioration of the conductive network due to expansion and contraction of volume of the Si-based active material in the second layer during charging and discharging may be prevented or reduced by carbon nanotube. Because carbon nanotube and the Si-based active material are included in substantially the same layer, the breaking of the conductive network due to the volume change of the Si-based active material may be inhibited or reduced by utilizing carbon nanotube. This may lead to improvements in cycle-life characteristics.

In the second layer, an amount of carbon nanotube may be about 0.5 wt% to about 5.0 wt%, about 1.0 wt% to about 4.0 wt%, or about 2 wt% to about 3 wt% based on the total 100 wt% of the second layer. If the amount of carbon nanotube is within the ranges, the effect of maintaining the conductive network may be more enhanced (e.g., the conductive network may be suitably maintained) without occurrence of the side reaction (e.g., undesirable side reaction) of the electrolyte and deterioration of initial efficiency.

The carbon nanotube (in the form of nanotubes) may have an average length of about 12 µm or less, about 5 µm to about 12 µm, or about 7 µm to about 9 µm. The carbon nanotube may have an average diameter of about 1 nm to about 5 nm, or about 2 nm to about 3 nm. If the average length and the average diameter of the carbon nanotube are within their respective range, the carbon nanotube may be readily or suitably dispersed, which may be advantageous for slurry preparation and coating, thus making it relatively easy to coat the electrode in a substantially uniform fashion. In the present disclosure, when the tubes are circular in cross-section, "diameter" indicates a circular diameter of the circular cross-section of the tube or an average circular diameter of the circular cross-section of the tubes, and when the tubes are non-circular in cross-section, the "diameter" indicates a major axis length (width) of the non-circular cross-section of the tube or an average major axis length (width) of the non-circular cross-section of the tubes.

If the negative active material layer includes two layers of which one directly contacts the current collector and refers to a bottom layer and the other one does not directly contact the current collector, is positioned on a top surface of the bottom layer, and refers to an upper layer, for example, the first layer may be a bottom layer and the second layer may be an upper layer. If the first layer is a bottom layer, the cycle-life characteristics may be further improved.

The boundaries between the first layer and the second layer may be clearly separated (e.g., may not overlap with each other), or may not be clearly separated (e.g., may be overlapped or mixed each other). For example, the boundaries where the first layer is overlapped with the second layer may have a region where components composing the first layer coexist with components composing the second layer. Such areas may be generated during preparation. If the second layer is an upper layer, the components composing the second layer may be impregnated into a surface of the first layer.

In one or more embodiments, the Si-based active material included in the second layer may be SiOₓ (0<x<2), a Si-C composite, or a combination thereof.

The Si-C composite may be a composite of silicon and amorphous carbon. According to one or more embodiments, the Si-C composite may include a silicon-based material and an amorphous carbon coated on a surface of the silicon-based material. For example, the Si-C composite may include secondary particles (each being) where silicon primary particles are agglomerated and an amorphous carbon coating layer is positioned on the surface of the secondary particles. The amorphous carbon may (also) be positioned between the silicon primary particles, for example, it may be coated on the silicon primary particles.

In one or more embodiments, the Si-C composite may include silicon nano particles (e.g., silicon particles in the nanometer scale) and an amorphous carbon coating layer positioned on a surface of the silicon nano particles.

The secondary particles may (each) be positioned at the center of (a particle of) the Si-C composite (in the form of particles), and thus, it may be referred to as (e.g., may constitute) a core or a center part. The amorphous carbon coating layer may be referred to as (e.g., may constitute) an outer part or a shell.

A mixing ratio of the silicon-based material and amorphous carbon may be a weight ratio of about 1:99 to about 60:40.

An average particle diameter (D50) of the silicon primary particles (primary silicon particles) may be about 10 nm to about 30 µm, according to one or more embodiments, may be about 10 nm to about 1000 nm, and according to other embodiments, may be about 20 nm to about 150 nm. If the average diameter of the silicon particle is within any of these ranges, the excessive or undesirable volume expansion caused during charge and discharge may be suppressed or reduced, and a breakage of the conductive path due to crushing of particle may be prevented or reduced.

If amorphous carbon is coated, a coating layer of amorphous carbon may have a thickness of about 5 nm to about 100 nm.

Amorphous carbon may include soft carbon, hard carbon, mesophase pitch carbide, sintered cokes, and/or the like.

In the second layer according to one or more embodiments, a mixing ratio of the lithium titanium oxide and the Si-based active material may be about 1:5 to about 1:13 by a weight ratio, or about 1:7 to about 1:11 by a weight ratio. If the mixing ratio of the lithium titanium oxide and the Si-based active material is within the ranges, relatively higher capacity and excellent or improved cycle-life characteristics may be realized.

In the second layer, a total weight of the lithium titanium oxide and the Si-based active material may about 90 wt% to about 98.5 wt% based on the total 100 wt% of the second layer.

In one or more embodiments, crystalline carbon is included in the first layer and the crystalline carbon may be of any suitable shape, e.g., sheet shaped, flake shaped, spherical shaped and/or fiber-shaped natural graphite and/or artificial graphite, or a combination thereof. The crystalline carbon may include natural graphite, artificial graphite, or a combination thereof.

In the first layer, a total amount of crystalline carbon may be about 95 wt% to about 99 wt% based on the total 100 wt% of the first layer.

The first layer and the second layer may include a binder. In the first layer or the second layer, an amount of the binder may be about 1 wt% to about 5 wt% based on the total 100 wt% of each layer.

The first layer or the second layer may include a conductive material. If the first layer further includes the conductive material, based on the total 100 wt% of the first layer, an amount of crystalline carbon may be about 90 wt% to about 98 wt%, an amount of the binder may be about 1 wt% to about 5 wt%, and an amount of the conductive material may be about 1 wt% to about 5 wt%.

If the second layer further includes the conductive material, based on the total 100 wt% of the second layer, an amount of the mixture of lithium titanium oxide and the Si-based active material may be about 90 wt% to about 97.5 wt%, an amount of carbon nanotube may be about 0.5 wt% to about 5 wt%, an amount of the binder may be about 1 wt% to about 5 wt%, and/or an amount of the conductive material may be about 1 wt% to about 5 wt%.

In each layer, amount of the crystalline carbon and/or amount of the lithium titanium oxide, and amounts of the Si-based active material, carbon nanotube, a binder, and a conductive material, refer to a ratio based on 100 wt% of the amount of each layer and it is not quantitative value (e.g., is not a set value), so that if the conductive material is further included (e.g., is included in a larger amount), the amount of other components may be adjusted accordingly.

The binder included in the first layer may be the same as or different from the binder included in the second layer. For example, the binder includes a non-aqueous binder, an aqueous binder, or a combination thereof.

The non-aqueous binder may be polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamideimide, polyimide, or combinations thereof.

The aqueous binder may include a styrene-butadiene rubber, an acrylated styrene-butadiene rubber, an acrylonitrile-butadiene rubber, an acrylic rubber, a butyl rubber, an ethylene oxide-containing polymer, polyvinylpyrrolidone, polypropylene, ethylene propylene copolymer, polyepichlorohydrin, polyphosphazene, polyacrylonitrile, polystyrene, an ethylene propylene diene copolymer, polyvinyl pyridine, chlorosulfonated polyethylene, latex, a polyester resin, an acrylic resin, a phenolic resin, an epoxy resin, polyvinyl alcohol, polyacrylic acid, or one or more combinations thereof.

The binder may include a cellulose-based compound, or may include the cellulose-based compound together with the aqueous binder. The cellulose-based compound includes one or more of carboxymethyl cellulose, hydroxypropyl methyl cellulose, methyl cellulose, or alkali metal salts thereof. The alkali metal may be Na, K, and/or Li. The cellulose-based compound may serve as a binder, and/or may serve as a thickener imparting viscosity. An amount of the cellulose-based compound may be suitably adjusted within (e.g., relative to) the amount of the binder, and for example, may be about 0.1 parts by weight to about 3 parts by weight based on 100 parts by weight of the negative active material.

The conductive material included in the first layer may be the same as or different from the conductive material included in the second layer.

The conductive material is included to provide (or improve) electrode conductivity, and any suitable electrically conductive material may be utilized as a conductive material unless it causes a chemical change in the battery. Examples of the conductive material may be a carbon-based material such as natural graphite, artificial graphite, carbon black, acetylene black, ketjen black, a carbon fiber, and/or the like; a metal-based material of a metal powder and/or a metal fiber including copper, nickel, aluminium, silver, and/or the like; a conductive polymer such as a polyphenylene derivative; or one or more mixtures (and/or combinations) thereof.

In one or more embodiments, the negative electrode includes a current collector supporting the negative active material layer. The current collector may include one selected from a copper foil, a nickel foil, a stainless steel foil, a titanium foil, a nickel foam, a copper foam, a polymer substrate coated with a conductive metal, or a combination thereof, but is not limited thereto.

The negative electrode according to one or more embodiments may be prepared by coating a composition for preparing the first layer on a current collector and drying the same to prepare a first layer, coating a composition for preparing a second layer and drying the same to prepare a second layer, and pressurizing. In some embodiments, the negative electrode may also be prepared by concurrently (e.g., simultaneously) coating the composition for the first layer and the composition for the second layer on the current collector, drying and pressurizing.

The pressurization may be carried out 1 time to 3 times, or 2 times to 3 times. The drying may be at a general (e.g., standard) room temperature and be an ambient pressure dry, and/or be a vacuum-dry. The vacuum-dry may be performed at about 100 °C to about 160 °C for about 1 hour to about 5 hours, but this condition may also be suitably adjusted.

The composition for preparing the first layer includes crystalline carbon, a binder, optionally, a conductive material, and a solvent, and the composition for preparing the second layer includes lithium titanium oxide, a Si-based active material, carbon nanotube, a binder, optionally, a conductive material, and a solvent. The solvent may be N-methyl pyrrolidone, and in some embodiments, if the binder is an aqueous binder, the solvent may be water. Such layer preparation method should be understood by those of ordinary skill in the art as an active material layer preparation method, and thus is not described in more detail in the present specification.

One or more embodiments provides the negative electrode, a positive electrode, and an electrolyte.

The positive electrode may include a current collector and a positive active material layer formed on the current collector.

The positive active material may include lithiated intercalation compounds that reversibly intercalate and deintercalate lithium ions. In some embodiments, one or more composite oxides of lithium and a metal selected from among cobalt, manganese, nickel, and combinations thereof, may be utilized. For example, the compounds represented by one of the following chemical formulae may be utilized: LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄ Li_{(3-f)}J₂(PO₄)₃ (0≤f≤2); Li_{(3-f)}Fe₂(PO₄)₃ (0≤f≤2); LiₐFePO₄ (0.90≤a≤1.8)

In the above chemical formulae, A is selected from among Ni, Co, Mn, and combinations thereof; X is selected from among Al, Ni, Co, Mn, Cr, Fe, Mg, Sr, V, a rare earth element, and combinations thereof; D¹ is selected from among O, F, S, P, and combinations thereof; E is selected from among Co, Mn, and combinations thereof; T is selected from among F, S, P, and combinations thereof; G is selected from among Al, Cr, Mn, Fe, Mg, La, Ce, Sr, V, and combinations thereof; Q is selected from among Ti, Mo, Mn, and combinations thereof; Z is selected from among Cr, V, Fe, Sc, Y, and combinations thereof; J is selected from among V, Cr, Mn, Co, Ni, Cu, and combinations thereof; L¹ is selected from among Mn, Al, and combinations thereof.

The compounds may have a coating layer on the surface, and/or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixture thereof. The coating layer may be disposed in any suitable method having no (or substantially no) adverse influence on properties of a positive electrode active material by utilizing these elements in the compound, and for example, the method may include any suitable coating method such as spray coating, dipping, and/or the like.

In the positive electrode, an amount of the positive active material may be about 90 wt% to about 98 wt% based on the total weight of the positive active material layer.

In embodiments, the positive active material layer may further include a binder and a conductive material. The binder and the conductive material may be included in an amount of about 1 wt% to about 5 wt%, respectively, based on the total amount of the positive active material layer.

The binder improves binding properties of positive active material particles with one another and with a current collector. Examples of the binder may include polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but are not limited thereto.

The conductive material is included to provide (or improve) electrode conductivity, and any suitable electrically conductive material may be utilized as a conductive material unless it causes a chemical change in the battery. Examples of the conductive material may include a carbon-based material such as natural graphite, artificial graphite, carbon black, acetylene black, ketjen black, a carbon fiber and/or the like; a metal-based material of a metal powder and/or a metal fiber including copper, nickel, aluminium, silver, and/or the like; a conductive polymer such as a polyphenylene derivative; or one or more mixtures (and/or combinations) thereof.

The current collector may include Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, caprolactone, and/or the like. The ether-based solvent may be dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethyl alcohol, isopropyl alcohol, and/or the like, and examples of the aprotic solvent may include nitriles such as R-CN (where R is a C2 to C20 linear, branched, or cyclic hydrocarbon, and may include a double bond, an aromatic ring, and/or an ether bond); amides such as dimethylformamide; dioxolanes such as 1,3-dioxolane and/or 1,4-dioxolane; sulfolanes, and/or the like.

The organic solvent may be utilized alone or in a mixture. If the organic solvent is utilized in a mixture, the mixture ratio may be controlled or selected in accordance with a desirable battery performance, and it should be understood by those skilled in the related art.

If the non-aqueous organic solvent is mixed and utilized, a mixed solvent of a cyclic carbonate and a chain carbonate, a mixed solvent of a cyclic carbonate and a propionate-based solvent, and/or a mixed solvent of a cyclic carbonate, a chain carbonate, and a propionate-based solvent may be utilized. The propionate-based solvent may be methyl propionate, ethyl propionate, propyl propionate, or a combination thereof.

Herein, if the cyclic carbonate and the chain carbonate, and/or the cyclic carbonate and the propionate-based solvent, are mixed, they may be mixed in a volume ratio of about 1:1 to about 1:9 and thus performance of an electrolyte solution may be improved. In some embodiments, if the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The organic solvent may further include an aromatic hydrocarbon-based solvent, as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 2.

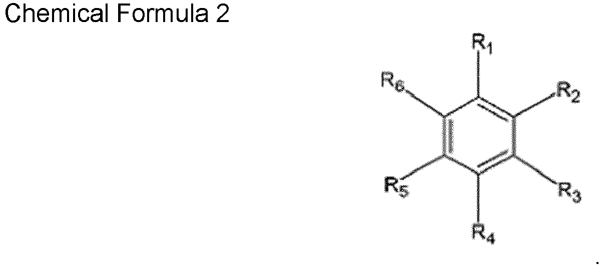

In Chemical Formula 2, R₁ to R₆ may each independently be the same or different and are selected from among hydrogen, a halogen, a C1 to C10 alkyl group, a haloalkyl group (e.g., a C1 to C10 haloalkyl group), and a combination thereof.

Examples of the aromatic hydrocarbon-based organic solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylethyl carbonate, vinylene carbonate and/or an ethylene carbonate-based compound represented by Chemical Formula 3, as an additive for improving cycle life.

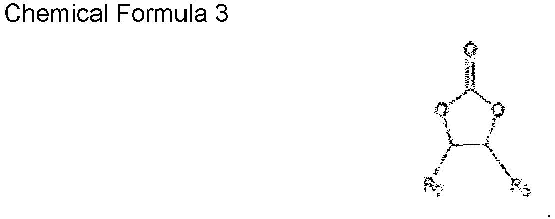

In Chemical Formula 3, R₇ and R₈ may each independently be the same or different and may each independently be hydrogen, a halogen, a cyano group (CN), a nitro group (NO₂), or a C1 to C5 fluoroalkyl group, provided that at least one of R₇ or R₈ is a halogen, a cyano group (CN), a nitro group (NO₂), or a C1 to C5 fluoroalkyl group, and R₇ and R₈ are not concurrently (e.g., simultaneously) hydrogen.

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like.

In the case of further utilizing the additive for improving cycle life, an amount of the additive may be suitably controlled or selected within an appropriate or suitable range.

The lithium salt dissolved in an organic solvent supplies a battery with lithium ions, facilitates the basic operation of the rechargeable lithium battery, and improves transportation of the lithium ions between positive and negative electrodes. Examples of the lithium salt include at least one supporting salt (e.g., two supporting salts) selected from among LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂) (wherein x and y are natural numbers, for example, an integer of about 1 to about 20), lithium difluoro(bisoxolato) phosphate), LiCl, Lil, LiB(C₂O₄)₂ (lithium bis(oxalato) borate: LiBOB) , and lithium difluoro(oxalato)borate (LiDFOB). A concentration of the lithium salt may range from about 0.1 M to about 2.0 M. If the lithium salt is included at the above concentration range, an electrolyte may have excellent or suitable performance and lithium ion mobility due to optimal or suitable electrolyte conductivity and viscosity.

A separator may be disposed between the positive electrode and the negative electrode depending on a type or kind of a rechargeable lithium battery. The separator may utilize polyethylene, polypropylene, polyvinylidene fluoride or multilayers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The drawing (FIG. 1) is an exploded perspective view of a rechargeable lithium battery according to one or more embodiments. The rechargeable lithium battery according to some embodiments is illustrated as a prismatic battery but is not limited thereto and may include variously-shaped batteries such as a cylindrical battery, a pouch battery, and/or the like.

Referring to the drawing, a rechargeable lithium battery 100 according to one or more embodiments may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20 and the separator 30.

Hereinafter, examples of the present disclosure and comparative examples are described. These examples, however, are not in any sense to be interpreted as limiting the scope of the present disclosure.

### Example 1

97.5 wt% of artificial graphite, 1 wt% of carboxymethyl cellulose, and 1.5 wt% of a styrene butadiene rubber were mixed in a water solvent to prepare a first layer slurry.

9.81 wt% of Li₄Ti₅O₁₂ with an aspect ratio of 10:1, 88.29 wt% of a silicon-carbon composite negative active material, 0.5 wt% of a single-walled carbon nanotube (SWCNT, average length: 10 µm, average diameter 5 nm), 0.9 wt% of carboxymethyl cellulose, and 0.5 wt% of a styrene butadiene rubber were mixed in a water solvent to prepare a second layer slurry.

As the silicon-carbon composite, a Si-C composite including a core including silicon nano particles and soft carbon coated on the surface of the core was utilized. The soft carbon coating layer had a thickness of 20 nm and the silicon nano particles had an average particle diameter D50 of 100 nm. Based on the total 100 wt% of the silicon-carbon composite, an amount of the silicon nano particles was 54 wt% and an amount of the soft carbon coating layer was 46 wt%.

The first layer slurry was coated on a Cu foil current collector and dried and then the second layer slurry was coated thereon, dried, and pressurized to prepare a negative electrode. In the negative electrode, the first layer had a thickness of 58 µm and the second layer had a thickness of 14 µm. For example, a thickness ratio of the first layer and the second layer was 4.14:1.

A LiNi_{0.91}Co_{0.08}Al_{0.01}O₂ positive active material, a ketjen black conductive material, and a polyvinylidene fluoride binder were mixed in N-methyl pyrrolidone solvent at a weight ratio of 98:1:1 weight ratio in N-methyl pyrrolidone solvent to prepare a positive active material slurry. The positive active material slurry was coated on an aluminium current collector and dried followed by pressurizing to prepare a positive electrode.

Using the negative electrode, the positive electrode, and an electrolyte, a coin-type or kind full cell was fabricated. The electrolyte was utilized as a 1M LiPF₆ dissolved in a mixed solvent of ethylene carbonate and dimethyl carbonate (3:7 by a volume ratio).

### Example 2

A second layer slurry was prepared by substantially the same procedure as in Example 1, except that Li₄Ti₅O₁₂ with an aspect ratio of 2:1 was utilized.

The first layer slurry of Example 1 was coated on a Cu foil current collector and dried, and then the second layer slurry was coated thereon and dried followed by pressurizing to prepare a negative electrode. In the negative electrode, the first layer had a thickness of 58 µm and the second layer had a thickness of 14 µm. A thickness ratio of the first layer and the second layer was 4.14:1.

Using the negative electrode, a coin-type or kind full cell was fabricated by substantially the same procedure as in Example 1.

### Example 3

The first layer slurry of Example 1 was coated on a Cu foil current collector and dried, and then the second layer slurry was coated thereon and dried followed by pressurizing to prepare a negative electrode. In the negative electrode, the first layer had a thickness of 63 µm and the second layer had a thickness of 10 µm. A thickness ratio of the first layer and the second layer was 6.3:1.

Using the negative electrode, a coin-type or kind full cell was fabricated by substantially the same procedure as in Example 1.

### Example 4

The first layer slurry of Example 2 was coated on a Cu foil current collector and dried, and then the second layer slurry of Example 2 was coated thereon and dried followed by pressurizing to prepare a negative electrode. In the negative electrode, the first layer had a thickness of 63 µm and the second layer had a thickness of 10 µm. A thickness ratio of the first layer and the second layer was 6.3:1.

A coin-type or kind full cell was fabricated by substantially the same procedure as in Example 1, except that the negative electrode was utilized.

### Comparative Example 1

A second layer slurry was prepared by substantially the same procedure as in Example 1, except that Li₄Ti₅O₁₂ with an aspect ratio of 11:1 was utilized.

The first layer slurry of Example 1 was coated on a Cu foil current collector and dried, and then the second layer slurry was coated thereon, dried and pressurized to prepare a negative electrode. In the negative electrode, the first layer had a thickness of 58 µm and the second layer had a thickness of 14 µm. A thickness ratio of the first layer and the second layer was 4.14:1.

Using the negative electrode, a coin-type or kind full cell was fabricated by substantially the same procedure as in Example 1.

### Comparative Example 2

A second layer slurry was prepared by substantially the same procedure as in Example 1, except that Li₄Ti₅O₁₂ with an aspect ratio of 1.5:1 was utilized.

The first layer slurry of Example 1 was coated on a Cu foil current collector and dried, and then the second layer slurry was coated thereon, dried and pressurized to prepare a negative electrode. In the negative electrode, the first layer had a thickness of 58 µm and the second layer had a thickness of 14 µm. A thickness ratio of the first layer and the second layer was 4.14:1.

Using the negative electrode, a coin-type or kind full cell was fabricated by substantially the same procedure as in Example 1.

### Comparative Example 3

The first layer slurry of Comparative Example 1 was coated on a Cu foil current collector and dried, and then the second layer slurry was coated thereon, dried and pressurized to prepare a negative electrode. In the negative electrode, the first layer had a thickness of 63 µm and the second layer had a thickness of 10 µm. A thickness ratio of the first layer and the second layer was 6.3:1.

Using the negative electrode, a coin-type or kind full cell was fabricated by substantially the same procedure as in Example 1.

### Comparative Example 4

The first layer slurry of Comparative Example 2 was coated on a Cu foil current collector and dried, and then the second layer slurry of Comparative Example 2 was coated thereon, dried and pressurized to prepare a negative electrode. In the negative electrode, the first layer had a thickness of 63 µm and the second layer had a thickness of 10 µm. A thickness ratio of the first layer and the second layer was 6.3:1.

Using the negative electrode, a coin-type or kind full cell was fabricated by substantially the same procedure as in Example 1.

### Example 5

16.35 wt% of Li₄Ti₅O₁₂ with an aspect ratio of 10:1, 81.75 wt% of a silicon-carbon composite negative active material, 0.5 wt% of a single-walled carbon nanotube (SWCNT, average length: 10 µm, average diameter 5 nm), 0.9 wt% of carboxymethyl cellulose, and 0.5 wt% of a styrene butadiene rubber were mixed in a water solvent to prepare a second layer slurry.

The silicon-carbon composite negative active material was the same as in Example 1.

The first layer slurry of Example 1 was coated on a Cu foil current collector and dried, and then the second layer slurry was coated thereon and dried followed by pressurizing to prepare a negative electrode. In the negative electrode, the first layer had a thickness of 58 µm and the second layer had a thickness of 14 µm. A thickness ratio of the first layer and the second layer was 4.14:1.

Using the negative electrode, a coin-type or kind full cell was fabricated by substantially the same procedure as in Example 1.

### Example 6

A second layer slurry was prepared by substantially the same procedure as in Example 5, except that Li₄Ti₅O₁₂ with an aspect ratio of 2:1 was utilized.

The silicon-carbon composite negative active material was the same as in Example 1.

The first layer slurry of Example 1 was coated on a Cu foil current collector and dried, and then the second layer slurry was coated thereon and dried followed by pressurizing to prepare a negative electrode. In the negative electrode, the first layer had a thickness of 58 µm and the second layer had a thickness of 14 µm. A thickness ratio of the first layer and the second layer was 4.14:1.

Using the negative electrode, a coin-type or kind full cell was fabricated by substantially the same procedure as in Example 1.

### Example 7

7 wt% of Li₄Ti₅O₁₂ with an aspect ratio of 10:1, 91.1 wt% of a silicon-carbon composite negative active material, 0.5 wt% of a single-walled carbon nanotube (SWCNT, average length: 10 µm, average diameter 5 nm), 0.9 wt% of carboxymethyl cellulose, and 0.5 wt% of a styrene butadiene rubber were mixed in a water solvent to prepare a second layer slurry.

The silicon-carbon composite negative active material was the same as in Example 1.

The first layer slurry of Example 5 was coated on a Cu foil current collector and dried, and then the second layer slurry was coated thereon and dried followed by pressurizing to prepare a negative electrode. In the negative electrode, the first layer had a thickness of 63 µm and the second layer had a thickness of 10 µm. A thickness ratio of the first layer and the second layer was 6.3:1.

Using the negative electrode, a coin-type or kind full cell was fabricated by substantially the same procedure as in Example 1.

### Example 8

A second layer slurry was prepared by substantially the same procedure as in Example 7, except that Li₄Ti₅O₁₂ with an aspect ratio of 2:1 was utilized.

The first layer slurry of Example 5 was coated on a Cu foil current collector and dried, and then the second layer slurry was coated thereon, dried and pressurized to prepare a negative electrode. In the negative electrode, the first layer had a thickness of 63 µm and the second layer had a thickness of 10 µm. For example, a thickness ratio of the first layer and the second layer was 6.3:1.

Using the negative electrode, a coin-type or kind full cell was fabricated by the same procedure as in Example 1.

### Comparative Example 5

98.5 wt% of artificial graphite, 1 wt% of carboxymethyl cellulose, and 0.5 wt% of a styrene butadiene rubber were mixed in a water solvent to prepare a first layer slurry.

9.86 wt% of Li₄Ti₅O₁₂ with an aspect ratio of 10:1, 88.74 wt% of a silicon-carbon composite negative active material, 0.9 wt% of carboxymethyl cellulose, and 0.5 wt% of a styrene butadiene rubber were mixed in a water solvent to prepare a first layer slurry.

The silicon-carbon composite negative active material was the same as in Example 1.

Using the first layer slurry and the second layer slurry, a negative electrode was prepared by the same procedure as in Example 1. In the negative electrode, the first layer had a thickness of 58 µm and the second layer had a thickness of 14 µm. A thickness ratio of the first layer and the second layer was 4.14:1.

Using the negative electrode, a coin-type or kind full cell was fabricated by substantially the same procedure as in Example 1.

### Comparative Example 6

A second layer slurry was prepared by the same procedure as in Comparative Example 5, except that Li₄Ti₅O₁₂ with an aspect ratio of 2:1 was utilized.

The first layer slurry of Comparative Example 5 was coated on a Cu foil current collector and dried, and then the second layer slurry was coated thereon and dried followed by pressurizing to prepare a negative electrode. In the negative electrode, the first layer had a thickness of 58 µm and the second layer had a thickness of 14 µm. A thickness ratio of the first layer and the second layer was 4.14:1.

Using the negative electrode, a coin-type or kind full cell was fabricated by substantially the same procedure as in Example 1.

### Comparative Example 7

The first layer slurry of Example 1 was coated on a Cu foil current collector and dried, and then the second layer slurry of Comparative Example 5 was coated thereon and dried followed by pressurizing to prepare a negative electrode. In the negative electrode, the first layer had a thickness of 75 µm and the second layer had a thickness of 10.7 µm. A thickness ratio of the first layer and the second layer was 7:1.

Using the negative electrode, a coin-type or kind full cell was fabricated by substantially the same procedure as in Example 1.

### Comparative Example 8

The first layer slurry of Example 1 was coated on a Cu foil current collector and dried, and then the second layer slurry of Comparative Example 6 was coated thereon and dried followed by pressurizing to prepare a negative electrode. In the negative electrode, the first layer had a thickness of 75 µm and the second layer had a thickness of 10.7 µm. A thickness ratio of the first layer and the second layer was 7:1.

Using the negative electrode, a coin-type or kind full cell was fabricated by substantially the same procedure as in Example 1.

The constituents of the negative electrodes according to Examples 1 to 8 and Comparative Examples 1 to 8 are summarized in Table 1. In Table 1, LTO represents Li₄Ti₅O₁₂ and SCN represents a silicon-carbon composite negative active material.

### Experimental Example 1) Evaluation of high-rate characteristic

The full cells according to Examples 1 to 8 and Comparative Examples 1 to 8 were subjected to a formation charge and discharge once under a following condition.

### 1) Formation

charge: constant current-constant voltage (CC-CV) 0.1 C, 4.2 V, 0.001 C cut-off
Rest: 10 minutes
discharge: CC 0.1 C, 2.5 V cut-off
Rest: 10 minutes

The cells after conducting a formation charge and discharge were charged and discharged at each rate, while changing the rate as follows.
0.2 C: constant current-constant voltage (CC-CV), 0.2 C, 4.2 V, 0.01 C cut-off/ 0.2 C, 2.5 V cut-off
0.5 C: constant current (CC), 0.5 C, 4.2 V cut-off / 0.2 C, 2.5 V cut-off
1.0 C: constant current (CC), 1.0 C, 4.2 V cut-off / 0.2 C, 2.5 V cut-off
1.5 C: constant current (CC), 1.5 C, 4.2 V cut-off / 0.2 C, 2.5 V cut-off
2.0 C: constant current (CC), 2.0 C, 4.2 V cut-off / 0.2 C, 2.5 V cut-off

A ratio of charge capacity at each rate relative to charge capacity at 0.2 was measured. The results are shown in Table 2.

### Experimental Example 2) Cycle-life characteristic

The full cells according to Examples 1 to 8 and Comparative Examples 1 to 8 were charged and discharged under a condition of 0.5 C constant current-constant voltage (CC-CV) 4.2 V, 0.01 C cut-off charge and 0.5 C constant current (CC) 2.5 V cut-off discharge for 100 cycles. A ratio of charge capacity at 100th cycle relative to charge capacity at a first cycle was measured. The results are shown in Table 2, as capacity retention (%).

### Experimental Example 3) Evaluation of cycle-life characteristic

The full cells according to Examples 1 to 8 and Comparative Examples 1 to 8 were charged and discharged under a condition of 0.5 C constant current-constant voltage (CC-CV) 4.2 V, 0.01 C cut-off charge and 0.5 C constant current (CC) 2.5 V cut-off discharge for 100 cycles. A ratio of charge capacity at 100th cycle relative to charge capacity at a first cycle was measured. The results are shown in Table 2, as capacity retention (%).

**Table 1**

| | First layer (Bottom layer) | Second layer (Upper layer) | LTO an aspect ratio | Mixing ratio of LTO:SCN (weight ratio) | CNT Amount (wt%) | First layer thickness (µm) | Second layer thickness (µm) | Ratio of first layer thickness: second layer thickness |
|---|---|---|---|---|---|---|---|---|
| Example 1 | Artificial graphite | LTO+SCN +SWCNT | 10:1 | 1:9 | 0.5 | 58 | 14 | 4.14:1 |
| Example 2 | Artificial graphite | LTO+SCN +SWCNT | 2:1 | 1:9 | 0.5 | 58 | 14 | 4.14:1 |
| Example 3 | Artificial graphite | LTO+SCN +SWCNT | 10:1 | 1:9 | 0.5 | 63 | 10 | 6.3:1 |
| Example 4 | Artificial graphite | LTO+SCN +SWCNT | 2:1 | 1:9 | 0.5 | 63 | 10 | 6.3:1 |
| Comparative Example 1 | Artificial graphite | LTO+ SCN+ SWCNT | 11:1 | 1:9 | 0.5 | 58 | 14 | 4.14:1 |
| Comparative Example 2 | Artificial graphite | LTO+ SCN+ SWCNT | 1.5:1 | 1:9 | 0.5 | 58 | 14 | 4.14:1 |
| Comparative Example 3 | Artificial graphite | LTO+ SCN+ SWCNT | 11:1 | 1:9 | 0.5 | 63 | 10 | 6.3:1 |
| Comparative Example 4 | Artificial graphite | LTO+ SCN+ SWCNT | 1.5:1 | 1:9 | 0.5 | 63 | 10 | 6.3:1 |
| Example 5 | Artificial graphite | LTO+SCN +SWCNT | 10:1 | 1:5 | 0.5 | 58 | 14 | 4.14:1 |
| Example 6 | Artificial graphite | LTO+SCN +SWCNT | 2:1 | 1:5 | 0.5 | 58 | 14 | 4.14:1 |
| Example 7 | Artificial graphite | LTO+SCN +SWCNT | 10:1 | 1:13 | 0.5 | 63 | 10 | 6.3:1 |
| Example 8 | Artificial graphite | LTO+SCN +SWCNT | 2:1 | 1:13 | 0.5 | 63 | 10 | 6.3:1 |
| Comparative Example 5 | Artificial graphite | LTO+SCN | 10:1 | 1:9 | 0 | 58 | 14 | 4.14:1 |
| Comparative Example 6 | Artificial graphite | LTO+SCN | 2:1 | 1:9 | 0 | 58 | 14 | 4.14:1 |
| Comparative Example 7 | Artificial graphite | LTO+SCN | 10:1 | 1:9 | 0 | 75 | 10.7 | 7:1 |
| Comparative Example 8 | Artificial graphite | LTO+SCN | 2:1 | 1:9 | 0 | 75 | 10.7 | 7:1 |

**Table 2**

| | High-rate characteristic (%) | | | | capacity retention (%) |
|---|---|---|---|---|---|
| | 0.5 C/0.2 C (%) | 1.0 C/0.2 C (%) | 1.5 C/0.2 C (%) | 2.0 C/0.2 C (%) | |
| Standard | 96% or more | 86% or more | 76% or more | 82% or more | 85% or more |
| Example 1 | 97.16 | 89.75 | 79.07 | 65.00 | 86.9 |
| Example 2 | 96.80 | 88.50 | 77.97 | 63.91 | 86.5 |
| Example 3 | 98.23 | 91.82 | 81.89 | 68.09 | 87.8 |
| Example 4 | 97.87 | 90.53 | 80.72 | 66.92 | 87.5 |
| Comparative Example 1 | 93.63 | 80.03 | 61.91 | 46.46 | 82.3 |
| Comparative Example 2 | 93.34 | 79.75 | 61.69 | 44.53 | 82.0 |
| Comparative Example 3 | 92.91 | 77.99 | 60.33 | 43.48 | 81.6 |
| Comparative Example 4 | 91.86 | 77.11 | 59.65 | 42.98 | 80.7 |
| Example 5 | 96.28 | 87.96 | 76.73 | 62.31 | 86.1 |
| Example 6 | 96.03 | 86.82 | 76.04 | 62.02 | 86.0 |
| Example 7 | 97.54 | 90.00 | 79.30 | 65.21 | 87.2 |
| Example 8 | 97.18 | 88.73 | 78.01 | 63.64 | 86.9 |
| Comparative Example 5 | 88.41 | 73.55 | 55.75 | 38.48 | 76.8 |
| Comparative Example 6 | 88.08 | 72.52 | 54.96 | 37.82 | 76.5 |
| Comparative Example 7 | 87.44 | 71.89 | 53.84 | 36.73 | 76.0 |
| Comparative Example 8 | 87.12 | 70.88 | 53.09 | 36.12 | 75.7 |

As shown in Table 2, rechargeable lithium cells according to Examples 1 to 8 including lithium titanium oxide each with an aspect ratio of 10:1 to 2:1 included in the second layer exhibited superior excellent or suitable high rate characteristics and capacity retention, compared to Comparative Examples 1 to 8.

The standard values in Table 2 are the required (or desired) values for practical utilize as a battery, and the rechargeable lithium cells of Examples 1 to 8 all satisfied the standard values. By way of contrast, Comparative Examples 1 to 8 did not satisfy the standard values, so that they are not suitable (or significantly less suitable) for practical application as batteries.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be example embodiments, it is to be understood that the present disclosure is not limited to the disclosed embodiments, but, on the contrary, is intended to cover one or more suitable modifications and equivalent arrangements included within the scope of the appended claims and their equivalents.

## Claims

1. A negative electrode for a rechargeable lithium battery, the negative electrode comprising:
a current collector;
a first layer comprising crystalline carbon; and
a second layer comprising lithium titanium oxide having an aspect ratio of about 10:1 to about 2:1, a Si-based active material, and carbon nanotube,
wherein the first layer is between the current collector and the second layer, and the second layer is thinner than the first layer.

2. The negative electrode as claimed in claim 1, wherein a ratio of a thickness of the first layer and a thickness of the second layer is about 6.9:1 to about 4.1:1.

3. The negative electrode as claimed in claim 1 or claim 2, wherein a ratio of a thickness of the first layer and a thickness of the second layer is about 6.5:1 to about 4.15:1.

4. The negative electrode as claimed in any one of claims 1 to 3, wherein the lithium titanium oxide has an aspect ratio of about 8:1 to about 2:1.

5. The negative electrode as claimed in any one of claims 1 to 4, wherein the carbon nanotube comprises a single-walled carbon nanotube (SWCNT), multi-walled carbon nanotube (MWCNT), or a combination thereof.

6. The negative electrode as claimed in any one of claims 1 to 5, wherein an amount of the carbon nanotube is in a range of about 0.5 wt% to 5 wt% based on the total 100 wt% of the second layer.

7. The negative electrode as claimed in any one of claims 1 to 6, wherein the Si-based active material comprises SiOₓ (0<x<2), Si-C composite, or a combination thereof.

8. The negative electrode as claimed in claim 7, wherein the Si-C composite comprises a composite of silicon and amorphous carbon.

9. The negative electrode as claimed in any one of claims 1 to 8, wherein the lithium titanium oxide is represented by Chemical Formula 1:
Chemical Formula 1 Li₄₊ₓTi_{y}M_{z}Oₜ,
wherein, in Chemical Formula 1, 0≤x≤3, 1≤y≤5, 0≤z≤3, 3≤t≤12, and
M is an element selected from among Mg, La, Tb, Gd, Ce, Pr, Nd, Sm, Ba, Sr, Ca, and combinations thereof.

10. The negative electrode as claimed in any one of claims 1 to 9, wherein a mixing ratio of the lithium titanium oxide and the Si-based active material is a weight ratio of about 1:5 to about 1:13.

11. The negative electrode as claimed in any one of claims 1 to 10, wherein the crystalline carbon comprises natural graphite, artificial graphite, or a combination thereof.

12. A rechargeable lithium battery, comprising:
a negative electrode of any one of claims 1 to 11;
a positive electrode; and
a non-aqueous electrolyte.
